# EUROPEAN PATENT SPECIFICATION

(11) **EP 2 258 769 B1**
(45) Date of publication and mention of the grant of the patent: **24.07.2013**
(21) Application number: 09724337.2
(22) Date of filing: 24.03.2009
(51) Int. Cl.: C08L 45/00, C08L 23/22, C08L 53/02, C09K 3/10, C09J 123/22

(54) **HOT-MELT COMPOSITION, SEALING MATERIAL, AND SOLAR BATTERY**
HEISSSCHMELZUSAMMENSETZUNG, DICHTUNGSMATERIAL UND SOLARBATTERIE
COMPOSITION THERMOFUSIBLE, MATÉRIAU D ÉTANCHEMENT ET PILE SOLAIRE

(30) Priority: 26.03.2008 JP 2008079824; 03.10.2008 JP 2008258070
(43) Date of publication of application: 08.12.2010
(73) Proprietor: AICA KOGYO CO., LTD., Kiyosu-shi, Aichi 452-0917 (JP)
(72) Inventor: SATO, Tomohiko, Ama-gun Aichi 490-1112 (JP); NAKAMURA, Tomoya, Kiyosu-shi Aichi 452-0917 (JP); SATO, Katsuhisa, Ama-gun Aichi 490-1112 (JP)
(74) Representative: Chantraine, Sylvie Hélène
(86) International application number: PCT/JP2009/055834
(87) International publication number: WO 2009/119589

(56) References cited:
- EP-A1- 0 845 816
- WO-A1-2009/037962
- GB-A- 1 509 264
- JP-A- 1 306 449
- JP-A- 1 306 450
- JP-A- 2 120 347
- JP-A- 4 256 468
- JP-A- 5 145 101
- JP-A- 9 091 773
- JP-A- 10 268 768
- JP-A- 11 307 795
- JP-A- 2001 011 409
- JP-A- 2003 282 900
- US-A- 4 092 282
- US-A1- 2006 166 023
- US-B1- 6 340 236

## Description

### TECHNICAL FIELD

The present invention relates to a solar battery comprising a hot meet for sealing EVA SHEET.

### BACKGROUND ART

A solar battery is a power generation system which converts light energy into electricity and has features that electric power can be generated continuously without requiring any fuel, high maintenance performance can be achieved since no movable portion is provided therein, no green house effect gas such as carbon dioxide is emitted, and installation on a roof or wall is possible requiring no large space. Taking advantage of these features, solar batteries are installed at places, such as outer space, mountainous areas and isolated islands, where other power generation and power supply methods are unlikely to be available. Also, solar batteries are installed at offices and homes as clean power generation systems.

A solar battery is manufactured by protecting a solar battery element, called a cell, with a metal frame and glass to thereby form a panel. A variety of resins are used to form a seal between the metal frame and the glass, and a known example of the resins is a hot-melt resin (Japanese Unexamined Patent Application Publication No. 2006-2909-13). Hot-melt resins are e greaterthan other resins, in adhesiveness to metal and glass, and stress relaxation performance when a load is applied.

The use of a terpene additive in a hot melt adhesive as a sealing material containing a butyl rubber has been generally disclosed in many prior art references (WO 2009/037962, GB 1500264, US 6340236 and EP 845816).

### DISCLOSURE OF THE INVENTION

### PROBLEMS TO BE SOLVED BY THE INVENTION

In conventional hot-melt compositions, however, adhesiveness is insufficient and thus cohesive failure occurs when a heavy load is applied thereto in a short time, or interfacial peeling occurs when a load is continuously applied thereto.

Also, the conventional hot-melt compositions sometimes contaminate (or yellow) an EVA (ethylene-vinyl acetate copolymer resin) sheet, which is used as a filler material for solar battery cells in a solar battery. Once the EVA is contaminated, an appearance of the solar battery is deteriorated, and also power generation efficiency of the solar battery is decreased.

The present invention, which was made in view of the above, has an object to provide a solar battery, comprising a hot melt composition. The hot-melt composition having an improved adhesiveness to metal, glass and the like, and being unlikely to contaminate an EVA sheet or the like.

### MEANS FOR SOLVING THE PROBLEMS

A hot-melt composition according to the present invention includes (a) butyl rubber and (b) one or more selected from a group consisting of hydrogenated terpene phenol, styrene modified terpene, and hydrogenated terpene.

The hot-melt composition of the present invention is excellent in adhesiveness to metal, glass. Accordingly, when the hot-melt composition of the present invention is used, for example, as a sealing material for sealing a gap between members made of metal, glass, it is possible to form a sealing structure which is unlikely to be broken even in a case where a load is exerted in a direction of separating the members.

Also, even if members to be sealed have different thermal expansion coefficient, such as a case where one of the members is of metal and the other is of glass, distortion resulting from the difference in thermal expansion coefficient can be reduced by using the hot-melt composition of the present invention as a sealing material. Accordingly, the sealing structure is unlikely to be broken.

Further, the hot-melt composition of the present invention is less likely to yellow (contaminate) an EVA sheet even when contacting the same, as compared with conventional hot-melt compositions. For example, when the hot-melt composition of the present invention is used as a sealing material in a solar battery in which an EVA sheet is used as a filler material of a solar battery cell, yellowing (contamination) of the EVA sheet can be reduced, and thus deterioration of an appearance of the solar battery can be avoided. When the hot-melt composition of the present invention is used as a sealing material, it is also possible to prevent decrease in power generation efficiency of the solar battery resulting from yellowing of the EVA sheet.

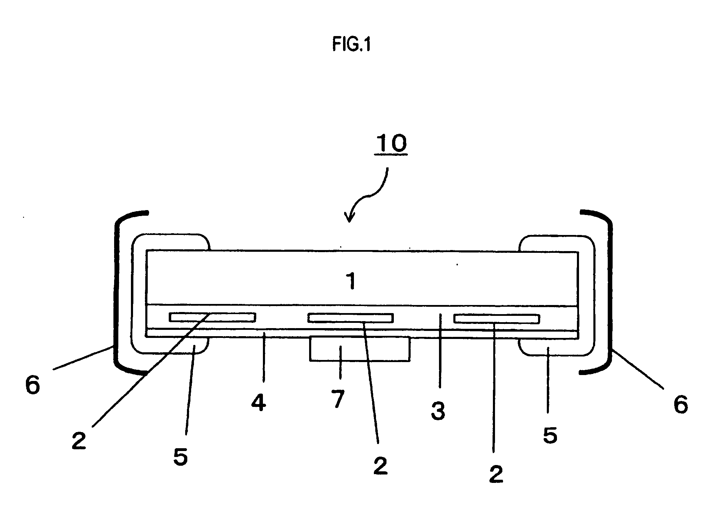

A solar battery may have, for example, a structure shown in FIG. 1. A solar battery 10 includes a sheet of glass 1, an EVA sheet 3 with embedded cells 2 and a backsheet 4, which are stacked in layers, and a terminal box 7 attached under the backsheet 4. That is, the EVA sheet 3 is used as a filler material of the cells 2 in the solar battery 10.

The solar battery 10 also includes an aluminum frame 6 for externally holding the glass 1, the EVA sheet 3 and the backsheet 4, and gaps 5 between the glass 1, the EVA sheet 3 and the backsheet 4, and the aluminum frame 6 are sealed with a sealing material 5 constituted by the hot-melt composition of the present invention. Although the sealing material 5 contacts the EVA sheet 3, as shown in FIG. 1, the sealing material 5 is unlikely to yellow the EVA sheet 3.

The above-mentioned butyl rubber is blended for the purpose of providing the hot-melt composition with sealing property, weather resistance, water resistance, heat resistance, shock absorption, etc. The butyl rubber preferably has a Mooney viscosity of from 20 to 90 and an unsaturation degree of about 0.5 to about 5.0.

The above-mentioned component (b) (one or more selected from a group consisting of hydrogenated terpene phenol, styrene modified terpene, and hydrogenated terpene) improves adhesiveness of the hot-melt composition. With the component (b) blended therein, the hot-melt composition of the present invention brings about effects of increased adhesiveness as well as non-contamination of a base material such as EVA. As the component (b), only one of hydrogenated terpene phenol, styrene modified terpene, and hydrogenated terpene may be blended, or two or three of them may be blended. The blending quantity of the component (b) is preferably within a range from total 10 to 45 weight-percent with respect to the entire hot-melt composition of the present invention.

Examples of commercial products of hydrogenated terpene phenol are YS Polyster TH130 and YS Polyster UH115 (trade names, all produced by Yasuhara Chemical Co., Ltd.). An example of commercial products of styrene modified terpene is YS Resin To 115 (trade name, produced by Yasuhara Chemical Co., Ltd.).

Examples of commercial products of hydrogenated terpene are Clearon P115, Clearon M115, and Clearon K110 (trade names, all produced by Yasuhara Chemical Co., Ltd.). Particularly, Clearon M115 and Clearon K110 are styrene modified hydrogenated terpene among hydrogenated terpenes.

A styrene block copolymer may further be blended in the hot-melt composition of the present invention. The styrene block copolymer is blended in order to ensure elasticity, cohesion force, adhesiveness to a base material, etc. To ensure elasticity and cohesion force, the styrene block copolymer suitably has an average molecular weight of 30000 to 500000. Examples of the styrene block copolymer are styrene-isoprene-styrene block copolymer (SIS), styrene-butadiene-styrene block copolymer (SBS), styrene-ethylene-butadiene-styrene block copolymer (SEBS), α-methylstyrene-butadiene-α-methylstyrene block copolymer, α-methylstyrene-isoprene-α-methylstyrene block copolymer; and their hydrogenated and modified products, such as styrene-ethylene-(ethylene-propylene)-styrene block copolymer (SEEPS), and styrene-ethylene-propylene-styrene block copolymer (SEPS).

When styrene block copolymer is blended, blending quantities of butyl rubber and styrene block copolymer are preferably selected within respective ranges of 20 to 35 weight percent and 3 to 15 weight percent with respect to the entire hot-melt composition, in order to achieve a good balance of sealing property, weather resistance, water resistance, heat resistance, shock absorption; and elasticity and cohesion force.

It is preferable to further add wax or liquid resin to the hot-melt composition of the present invention, in order to control flowability and adherence thereof during melting. A specific example of liquid wax is paraffin wax, while specific examples of liquid resin are liquid polybutadiene and liquid polybutene.

Besides the above-described components, a filler material, such as talc, clay, silica, calcium carbonate, titanium oxide and hollow filler, may be blended in the hot-melt composition of the present invention. Especially, the hollow filler has functions of improving filling performance, reducing weight, and adjusting flowability, and also has a feature of being unlikely to settle out. Specific examples of the filler material are glass microballoon, pearlite, silica balloon, alumina balloon, carbon balloon and aluminosilicate balloon, having an average particle diameter of less than 100 µm and an apparent specific gravity of less than 1.0. Among these, silica balloon is preferable in terms of availability, cost.

Moreover, when heat aging resistance is needed, an antioxidant may be added. Examples of the antioxidant are copper-based antioxidants, copper salt-based antioxidants, copper halide-based antioxidants, phosphorus-based antioxidants, phenol-based antioxidants, hindered amine-based antioxidants, sulfur-based antioxidants, lactone-based antioxidants, aromatic amine, and metal deactivators such as chelating agent.

Examples of phenol-based antioxidants are 2,6-di-t-butylphenol derivatives, 2-methyl -6-t-butylphenol derivatives, octadecyl-3-(3,5-dibutyl-4-hydroxyphenyl) propionate, 4,4-butylidene-bis(6-t-butyl-m-cresol), pentaerythrityl-tetrakis {3-(3,5-di-t-butyl-4-hydroxyphenyl)propionate}, 2-{1-(2-hydroxy-3,5-di-t-pentylphenyl)-ethyl}-4,6-dit-pentylphenyl acrylate.

Examples of phosphorus-based antioxidants are tris(2,4-di-t-butylphenyl)phosphate, cyclic neopentanetetrabis(2,4-di-t-butylphenyl)phosphate, distearyl pentane erythritol diphosphate, sodium dihydrogen phosphate, disodium monohydrogen phosphate.

Examples of hindered amine-based antioxidants are bis(2,2,6,6-tetramethyl-4-piperidyl)sebacate, bis(1,2,2,6,6-pentamethyl-4-piperidyl)sebacate, 1,2,3,4-tetrakis(2,2,6,6-tetramethyl-4-piperidyl oxycarbonyl)butane, dimethyl succiniate-1-(2-hydroxylethyl-4-hydroxy-2,2,6,6-tetr amethylpiperidine polycondensate, 1-(3,5-di-t-butyl-4-hydroxyphenyl)-1, 1-bis(2,2,6,6-tetramethyl-4-piperidyloxycarbonyl) pentane, N,N-bis(3-aminopropyl)ethylenediamine, 4-benzoyloxy-2,2,6,6-tetramethylpiperidine, bis(octylon-2,2,6,6-tetramethyl-4-piperidyl)sevacate,

The hot-melt composition of the present invention preferably contains substantially no substance (for example, phenol modified terpene) that is likely to promote yellowing of the EVA sheet. The term "contains substantially no" here includes a case where the substance is contained in such an extremely small amount that yellowing of the EVA sheet will not be caused.

The hot-melt composition of the present invention may be manufactured by kneading the above-mentioned blending components in a Banbury mixer, a heating kneader, a single-axis extruder, a double-axis extruder.

### BRIEF DESCRIPTION OF THE DRAWINGS

FIG. 1 is a cross-sectional view showing a structure of a solar battery 10.

### EXPLANATION OF REFERENCE NUMERALS

1... glass, 2...cell, 3... EVA sheet, 4...backsheet, 5...sealing material, 6... aluminum frame, 7... terminal box, 10... solar battery

### BEST MODE FOR CARRYING OUT THE INVENTION

### Embodiment 1

### 1. Manufacturing of Hot-melt Composition

According to blending ratios indicated in Table 1 and Table 2, components listed in a column of "Blending" are heated and mixed with a sigma blade kneader to obtain hot-melt compositions of Embodiments 1-1 to 1-13 and Comparative Example R1.

**[Table 1]**

| Blending | | Embodiment | | | | | | |
|---|---|---|---|---|---|---|---|---|
| | | 1-1 | 1-2 | 1-3 | 1-4 | 1-5 | 1-6 | 1-7 |
| Butyl 065 | | 100.0 | 100.0 | 100.0 | 100.01 | 100.0 | 100.0 | 100.0 |
| Septon 2063 | | 20.0 | 20.0 | 20.0 | 20.0 | 20.0 | 20.0 | 20.0 |
| Styrene modified terpene | YS Resin To115 | 165.0 | 145.0 | 100.0 | 50.0 | 25.0 | | |
| Hydrogenated terpene | Clearon P-115 | | | | | | | |
| | Clearon M-115 | | | | | | 100.0 | 50.0 |
| | Clearon K-110 | | | | | | | |
| Hydrogenated terpene phenol | YS Polyster TH 130 | | | | | | | |
| | YS Polyster UH115 | | | | | | | |
| Petroleum resin | Escorez 235E | | | | | | | |
| Sumilizer GA-80 | | 1.2 | 1.2 | 1.2 | 1.2 | 1.2 | 1.2 | 1.2 |
| Irgafos 168 | | 2.4 | 2.4 | 2.4 | 2.4 | 2.4 | 2.4 | 2.4 |
| Viscol 550-P | | 30.0 | 30.0 | 30.0 | 30.0 | 30.0 | 30.0 | 30.0 |
| Polybutene HV-300 | | 51.0 | 51.0 | 51.0 | 51.0 | 51.0 | 51.0 | 51.0 |
| APDS | | 10.0 | 10.0 | 10.0 | 10.0 | 10.0 | 10.0 | 10.0 |
| Total | | 379.6 | 359.6 | 314.6 | 264.6 | 239.6 | 314.6 | 264.6 |
| EVA Contamination Evaluation | | ○ | ○ | ○ | ○ | ○ | ○ | ○ |
| Adhesiveness to glass | | ○ | ○ | ○ | ○ | ○ | Δ | Δ |

**[Table 2]**

| Blending | | Embodiment | | | | | | Comparative Example |
|---|---|---|---|---|---|---|---|---|
| | | 18 | 1-9 | 1-10 | 1-11 | 1-12 | 1-13 | R1 |
| Butyl 065 | | 100.0 | 100.0 | 100.0 | 100.0 | 100.0 | 100.0 | 100.0 |
| Septon 2063 | | 20.0 | 20.0 | 20.0 | 20.0 | 20.0 | 20.0 | 20.0 |
| Styrene modified terpene | YS Resin To115 | | 100.0 | 50.0 | 25.0 | 25.0 | 25.0 | |
| Hydrogenated terpene | Clearon P-115 | | | | | | | |
| | Clearon M-115 | 25.0 | 45.0 | 95.0 | 120.0 | | | |
| | Clearon K-110 | | | | | | | |
| Hydrogenated terpene phenol | YS Polyster TH 130 | | | | | 100.0 | | |
| | YS Polyster UH115 | | | | | | 100.0 | |
| Petroleum resin | 235E | | | | | | | |
| Sumilizer GA-80 | | 1.2 | 1.2 | 1.2 | 1.2 | 1.2 | 1.2 | 1.2 |
| Irgafos 168 | | 2.4 | 2.4 | 2.4 | 2.4 | 2.4 | 2. | 2.4 |
| VISCOL550-P | | 30.0 | 30.0 | 30.0 | 30.0 | 30.0 | 30.0 | 30.0 |
| Polybutene HV-300 | | 51.0 | 51.0 | 51.0 | 51.0 | 51.0 | 51.0 | 51.0 |
| APDS | | 10.0 | 10.0 | 10.0 | 10.0 | 10.0 | 10.0 | 10.0 |
| Total | | 239.6 | 359.6 | 359.6 | 339.6 | 339.6 | 339.6 | 214.6 |
| EVA Contamination Evaluation | | ○ | ○ | ○ | ○ | ○ | ○ | U |
| Adhesiveness to glass | | Δ | Δ | Δ | Δ | ○ | ○ | × |

In Table 1 and Table 2, Butyl 065 (trade name, produced by Japan Butyl Co., Ltd.) is a butyl rubber. Septon 2063 (trade name, produced by Kuraray Co., Ltd.) is a styrenic block copolymer (SEPS). YS Resin To115 (trade name, produced by Yasuhara Chemical Co., Ltd.) is a styrene modified terpene. Each of Clearon P-115 (trade name, produced by Yasuhara Chemical Co., Ltd.), Clearon M-115 (trade name, produced by Yasuhara Chemical Co., Ltd.), and Clearon K-110 (trade name, produced by Yasuhara Chemical Co., Ltd.) is a hydrogenated terpene. Polybutene HV-300 (trade name, produced by Nippon Petrochemicals Co., Ltd.) is a liquid polybutene. Viscol 550-P (trade name, produced by Sanyo Chemical Industries, Ltd.) is a paraffin wax. 1, 3-bis(aminopropyl) tetramethyldisiloxane (APDS) is a silane coupling agent. Sumilizer GA-80 (trade name, produced by Sumitomo Chemical Co., Ltd.) is a phenol-based antioxidant. Irgafos 168 (trade name, Chiba-Geigy K.K.) is a phosphorus-based antioxidant. Escorez ECR-235E (trade name, produced by Tonex Co., Ltd.) is a petroleum resin (alicyclic tackifier resin).

2. Effects Brought by Hot-melt Composition (1) The hot-melt compositions in Embodiments 1-1 to 1-13 are excellent in adhesiveness to aluminum and glass. This is proved by the experiment described below.

The hot-melt composition of each of Embodiments 1-1 to 1-13 and Comparative Example R1 was applied in a groove (groove width: 5 mm, groove depth: 7 mm, longitudinal length of groove: 50 mm) formed in an aluminum frame so as to fill up the groove, and was left for one day at a temperature of 23°C in a 50%RH atmosphere.

Subsequently, the aluminum frame was kept still for 10 minutes in a thermostatic oven at a temperature of 100 °C, and was taken out from the thermostatic oven. Then immediately a glass plate having a thickness of 3 mm, a width of 25 mm and a height of 50 mm was inserted to a depth of 3 mm into the groove, in which the hot-melt composition was filled, of the aluminum frame. The aluminum frame and the glass plate were cooled and cured for 3 days at a temperature of 23°C in a 50%RH atmosphere to prepare a specimen. The glass plate in the specimen was pulled out from the groove at a pulling speed of 20 mm/min to forcibly break a sealing material made of a hot-melt resin, and a state of breaking was observed.

Adhesiveness of the hot-melt compositions was evaluated according to the following criteria.
○ : total cohesive failure
Δ : cohesive failure and adhesive failure are coexistent
× : total adhesive failure
Evaluation results are shown in above Table 1 and Table 2.

As shown in Table 1 and Table 2, the evaluation results of the hot-melt compositions in Embodiments 1-1 to 1-13 were ○ or Δ, which indicated excellent adhesiveness. In contrast, the evaluation result of the hot-melt composition in Comparative Example R1 was × , which indicated poor adhesiveness.

### (2) EVA Contamination Properties

The hot-melt compositions in Embodiments 1-1 to 1-13 are less likely to yellow (contaminate) an EVA sheet even when contacting the same. This is proved by the experiment described below.

Each of the hot-melt compositions in Embodiments 1-1 to 1-13 and Comparative Example R1 was adhered on the EVA sheet adhered to glass. The hot-melt composition had a size of a diameter of 3 mm and a thickness of 2 mm. After leaving the hot-melt composition in this state for 1,000 hours at a temperature of 85°C in an 85%RH atmosphere, and then presence/absence of yellowing of the EVA sheet was evaluated according to the following criteria.

○: noticeable yellowing is observed
× : noticeable yellowing is not observed
Evaluation results thereof are shown in above Table 1 and Table 2.

As shown in Table 1 and Table 2, the evaluation results of the hot-melt compositions in Embodiments 1-1 to 1-13 were ○, which indicated non-contamination of the EVA.

### Embodiment 2

1. Manufacturing of Hot-melt Composition According to blending ratios indicated in Table 3, components listed in a column of "Blending" were heated and mixed with a sigma blade kneader to obtain hot-melt compositions of Embodiments 2-1 to 2-6 and Comparative Examples R2 to R4.

**[Table 3]**

| Blending | | Embodiment | | | | | | Comparative Example | | |
|---|---|---|---|---|---|---|---|---|---|---|
| | | 2-1 | 2-2 | 2-3 | 2-4 | 2-5 | 2-6 | R2 | R3 | R4 |
| Butyl 065 | | 100,0 | 100,0 | 100,0 | 100,0 | 100,0 | 100,0 | 100,0 | 100,0 | 100,0 |
| Septon 2063 | | 20,0 | 20,0 | 20,0 | 20,0 | 20,0 | 20,0 | 20,0 | 20,0 | 20,0 |
| Styrene modified terpene | YS Resin To115 | 70,0 | | | | | | | | |
| Hydrogenated terpene | Clearon P - 115 | 75.0 | 145,0 | 75,0 | | 75,0 | | | | |
| | Clearon M-115 | | | 70,0 | 145,0 | | | | | |
| | Clearon K-110 | | | | | 70,0 | 145,0 | | | |
| Hydrogenated terpene phenol | YS Polyster TH130 | | | | | | | | | |
| | YS Polyster UH 115 | | | | | | | | | |
| Phenol modified terpene | YS Polyster U-115 | | | | | | | 145,0 | | |
| Bisphenol modified terpene | YS Polyster 2115 | | | | | | | | 145,0 | |
| Petroleum resin | Escorez 235E | | | | | | | | | 145,0 |
| Sumilizer GA-80 | | 1,2 | 1,2 | 1,2 | 1,2 | 1,2 | 1,2 | 1,2 | 1,2 | 1,2 |
| Irgafos 168 | | 2,4 | 2,4 | 2,4 | 2,4 | 2,4 | 2,4 | 2,4 | 2,4 | 2,4 |
| Viscol 550-P | | 20,0 | 20,0 | 20,0 | 20,0 | 20,0 | 20,0 | 20,0 | 20,0 | 20,0 |
| Polybutee HV-300 | | 51,0 | 51,0 | 51,0 | 51,0 | 51,0 | 51,0 | 51,0 | 51,0 | 51,0 |
| APDS | | 10,0 | 10,0 | 10,0 | 10,0 | 10,0 | 10,0 | 10,0 | 10,0 | 10,0 |
| Total | | 349,6 | 349,6 | 349,6 | 349,6 | 349,6 | 349,6 | 349,6 | 349,6 | 349,6 |
| EVA Contamination Evaluation | | ○ | ○ | ○ | ○ | ○ | ○ | × | × | ○ |
| Adhesiveness to glass | | ○ | Δ | Δ | Δ | Δ | Δ | ○ | ○ | × |

In Table 3, YS Polyster U-115 (trade name, produced by Yasuhara Chemical Co., Ltd.) is an non-hydrogenated terpene resin (phenol modified terpene). YS Polyster 2115 (trade name, produced by Yasuhara Chemical Co., Ltd.) is a bisphenol modified terpene.

### 2. Effects Brought by Hot-melt Composition

(1) The hot-melt compositions in Embodiments 2-1 to 2-6 are excellent in adhesiveness to aluminum and glass. This is proved by the experiment described below.

In a same manner as in Embodiment 1, adhesiveness of each of the hot-melt compositions of Embodiments 2-1 to 2-6 and Comparative Examples R2 to R4 was tested.
Evaluation results are shown in above Table 3.

As shown in Table 3, the evaluation results of the hot-melt compositions in Embodiments 2-1 to 2-6 were ○ or Δ, which indicated excellent adhesiveness. In contrast, the evaluation result of the hot-melt composition in Comparative Example R4, in which petroleum resin was blended in place of the component (b), was ×, which indicated poor adhesiveness.

### (2) EVA Contamination Properties

The hot-melt compositions in Embodiments 2-1 to 2-6 are less likely to yellow (contaminate) an EVA sheet even when contacting the same. This is proved by the experiment described below.

In a same manner as in Embodiment 1, EVA contamination properties of each of the hot-melt compositions of Embodiments 2-1 to 2-6 and Comparative Examples R2 to R4 were evaluated.
Evaluation results are shown in above Table 3.
As shown in Table 3, the evaluation results of the hot-melt compositions in 2-1 to 2-6 were ○ , which indicated non-contamination of the EVA. In contrast, the evaluation results of the hot-melt composition in Comparative Examples R2 to R3, in which phenol modified terpene or bisphenol modified terpene was blended in place of the component (b), was × , which indicated contamination of the EVA.

### Embodiment 3

1. Manufacturing of Hot-melt Composition According to blending ratios indicated in Table 4, components listed in a column of "Blending" were heated and mixed with a sigma blade kneader to obtain hot-melt compositions of Embodiments 3-1 to 3-7 and Comparative Examples R5 to R7.

**[Table 4]**

| Blending | | Embodiment | | | | | | | Comparative Example | | |
|---|---|---|---|---|---|---|---|---|---|---|---|
| | | 3-1 | 3-2 | 3-3 | 3-4 | 3-5 | 3-6 | 3-7 | R5 | R6 | R7 |
| Butyl 065 | | 100,0 | 100,0 | 100,0 | 100,0 | 100,0 | 100,0 | 100,0 | 100,0 | 100,0 | 100,0 |
| Septon 2063 | | 40,01 | 40,0 | 40,0 | 40,0 | 40,0 | 40,0 | 40,0 | 40,0 | 40,0 | 40,0 |
| Styrene modified terpene | YS Resin Tol15 | 70,0 | 145,0 | | | | | | | | |
| Hydrogenated terpene | Clearon P-115 | 75,0 | | 145,0 | 75,0 | | 75,0 | | | | |
| | Clearon M-115 | | | | 70,0 | 145,0 | | | | | |
| | Clearon K-110 | | | | | | 70.0 | 145,0 | | | |
| Hydrogenated terpene phenol | YS Polyster TH 130 | | | | | | | | | | |
| | YS Polyster-UH115 | | | | | | | | | | |
| Phenol modified terpene | YS Polyster U-115 | | | | | | | | 145,0 | | |
| Bisphenol modified terpene | YS Polyster 2115 | | | | | | | | | 145,0 | |
| Petroleum resin | Escorez 235E | | | | | | | | | | 145,0 |
| Sumilizer GA-80 | | 1,2 | 1,2 | 1,2 | 1,2 | 1,2 | 1,2 | 1,2 | 1,2 | 1,2 | 1,2 |
| Irgafos 168 | | 2,4 | 2,4 | 2,4 | 2,4 | 2,4 | 2,4 | 2.4 | 2.4 | 2,4 | 2,4 |
| Viscol 550-P | | 30,0 | 30,0 | 30,0 | 30.0 | 30.0 | 30,0 | 30,0 | 30,0 | 30,0 | 30,0 |
| Polybutene HV-300 | | 41,0 | 41,0 | 41,0 | 41,0 | 41,0 | 41,0 | 41,0 | 41,0 | 41,0 | 41,0 |
| APDS | | 10,0 | 10,0 | 10,0 | 10,0 | 10,0 | 10,0 | 10,0 | 10,0 | 10,0 | 10,0 |
| Total | | 369.6 | 369,6 | 369,6 | 369,6 | 369,6 | 369,6 | 369,6 | 369,6 | 369,6 | 369,6 |
| EVA Contamination Evaluation | | ○ | ○ | ○ | ○ | ○ | ○ | ○ | × | × | ○ |
| Adhesiveness to glass | | ○ | ○ | Δ | Δ | Δ | Δ | Δ | ○ | ○ | × |

### 2. Effects Brought by Hot-melt Composition

(1) The hot-melt compositions in Embodiments 3-1 to 3-7 are excellent in adhesiveness to aluminum and glass. This is proved by the experiment described below.

In a same manner as in Embodiment 1, adhesiveness of each of the hot-melt compositions of Embodiments 3-1 to 3-7 and Comparative Examples R5 to R7 was tested.
Evaluation results are shown in above Table 4.

As shown in Table 4, the evaluation results of the hot-melt compositions in Embodiments 3-1 to 3-7 were ○ or Δ, which indicated excellent adhesiveness. In contrast, the evaluation result of the hot-melt composition in Comparative Example R7, in which petroleum resin was blended in place of the component (b), was ×, which indicated poor adhesiveness.

### (2) EVA Contamination Properties

The hot-melt compositions in Embodiments 3-1 to 3-7 are less likely to yellow (contaminate) an EVA sheet even when contacting the same. This is proved by the experiment described below.

In a same manner as in Embodiment 1, EVA contamination properties of the hot-melt compositions of Embodiments 3-1 to 3-7 and Comparative Examples R5 to R7 were evaluated. Evaluation results are shown in above Table 4.
As shown in Table 4, the evaluation results of the hot-melt compositions in Embodiments 3-1 to 3-7 were ○, which indicated non-contamination of the EVA. In contrast, the evaluation results of the hot-melt compositions in Comparative Examples R5 to R6, in which phenol modified terpene or bisphenol modified terpene was blended in place of the component (b), was ×, which indicated contamination of the EVA.

## Claims

1. A solar battery (10) comprising:
- an ethylene-vinyl acetate copolymer resin (EVA) sheet (3), and
- a hot-melt composition comprising:
(a) butyl rubber; and
(b) one or more selected from a group consisting of hydrogenated terpene phenol, styrene modified terpene, and hydrogenated terpene
said hot-melt composition being used as a sealing material (5) that seals the EVA sheet (3).

2. The solar battery according to claim 1, wherein a blending quantity of the component (b) is within a range from total 10 to 45 weight-percent with respect to the entire hot-melt composition.

3. The solar battery according to claim 1, wherein a blending quantity of the component (a) is within a range from 20 to 35 weight-percent with respect to the entire hot-melt composition, when styrene block copolymer is present.

4. Use of a hot-melt composition comprising:
(a) butyl rubber; and
(b) one or more selected from a group consisting of hydrogenated terpene phenol, styrene modified terpene, and hydrogenated terpene
to provide sealing to an EVA sheet in a solar battery.

## Patentansprüche

1. Solarbatterie (10) umfassend:
- ein Blatt (3) aus Ethylen-Vinylacetat-Copolymerharz (EVA) und
- eine Heißschmelzzusammensetzung, umfassend:
(a) Butylgummi und
(b) eines oder mehrere, gewählt aus der Gruppe, die besteht aus hydriertem Terpenphenol, Styrol-modifiziertem Terpen und hydriertem Terpen,
wobei die Heißschmelzzusammensetzung als Dichtmaterial (5) verwendet wird, das das EVA-Blatt abdichtet.

2. Solarbatterie (10) nach Anspruch 1, wobei eine Beimischmenge der Komponente (b) im Bereich von insgesamt 10 bis 45 Gewischtsprozent bezüglich der gesamten Heißschmelzzusammensetzung liegt.

3. Solarbatterie (10) nach Anspruch 1, wobei eine Beimischmenge der Komponente (a) im Bereich von 20 bis 35 Gewischtsprozent bezüglich der gesamten Heißschmelzzusammensetzung liegt, wenn Styrolblockcopolymer vorliegt.

4. Verwendung einer Heißschmelzzusammensetzung, umfassend
(a) Butylgummi und
(b) eines oder mehrere, gewählt aus der Gruppe, die besteht aus hydriertem Terpenphenol, Styrol-modifiziertem Terpen und hydriertem Terpen,
um einem EVA-Blatt eine Abdichtung in einer Solarbatterie bereitzustellen.

## Revendications

1. Batterie solaire (10) comprenant :
- une feuille de résine copolymère d'éthylène-acétate de vinyle (EVA) (3), et
- une composition thermofusible comprenant :
(a) un caoutchouc de butyle ; et
(b) un ou plusieurs choisis dans un groupe constitué de terpène phénol hydrogéné, de terpène styrène-modifié et de terpène hydrogéné
ladite composition thermofusible étant utilisée comme matériau d'étanchéité (5) qui rend de la feuille d'EVA (3) étanche.

2. Batterie solaire selon la revendication 1, dans laquelle une quantité de dosage du constituant (b) se trouve dans un intervalle d'un total de 10 à 45 % en masse par rapport à la composition thermofusible entière.

3. Batterie solaire selon la revendication 1, dans laquelle la quantité de dosage du constituant (a) se trouve dans un intervalle de 20 à 35 % en masse par rapport à la composition thermofusible entière, lorsqu'un copolymère séquencé de styrène est présent.

4. Utilisation d'une composition thermofusible comprenant :
(a) un caoutchouc de butyle ; et
(b) un ou plusieurs choisis dans un groupe constitué d'un terpène phénol hydrogéné, d'un terpène styrène-modifié et d'un terpène hydrogéné
pour rendre étanche une feuille d'EVA dans une batterie solaire.
